# EUROPÄISCHE PATENTSCHRIFT

(11) **EP 4 088 006 B1**
(45) Veröffentlichungstag und Bekanntmachung des Hinweises auf die Patenterteilung: **15.04.2026**
(21) Anmeldenummer: 21708121.5
(22) Anmeldetag: 08.02.2021
(51) Int. Cl.: F01D 5/18, F01D 25/12, F01D 5/00, B22F 5/04, B23K 35/02, B23P 6/00, B23P 6/04, B23P 15/04, F01D 5/14, F01D 5/20

(54) **TURBINENSCHAUFELSPITZE, TURBINENSCHAUFEL UND VERFAHREN**
TURBINE BLADE TIP, TURBINE BLADE AND METHOD
POINTE D'AUBE DE TURBINE, AUBE DE TURBINE ET PROCÉDÉ

(30) Priorität: 06.03.2020 DE 102020202891
(43) Veröffentlichungstag der Anmeldung: 16.11.2022
(73) Patentinhaber: Siemens Energy Global GmbH & Co. KG, 81739 München (DE)
(72) Erfinder: ANDERS, Björn, 10559 Berlin (DE); ANTON, Reiner, 14193 Berlin (DE); KRABIELL, Kay, 16562 Hohen Neuendorf (DE); LERNER, Christian, 46282 Dorsten (DE)
(86) Internationale Anmeldenummer: PCT/EP2021/052959
(87) Internationale Veröffentlichungsnummer: WO 2021/175538

(56) Entgegenhaltungen:
- EP-A1- 3 428 397
- WO-A1-2019/177600
- US-A1- 2019 153 873
- US-A1- 2019 170 000
- US-B2- 9 816 389

## Beschreibung

Die Erfindung bezieht sich auf ein verbessertes Design einer Turbinenschaufelspitze einer Turbinenschaufel sowie Herstellungsverfahren dafür.

Turbinenschaufeln von Gasturbinen oder Turbinen, die einer hohen Temperaturbelastung ausgesetzt sind, weisen im Inneren Kühlstrukturen sowie gegebenenfalls Kühllöcher an der Außenwand des Schaufelblatts auf, aus denen Kühlluft aus dem Inneren der Turbinenschaufel herausströmt.

Diese Schaufelspitzen weisen an ihrem radialen Ende oft eine umlaufende Wand auf, die an der Außenkontur des Schaufelblatts entlang verläuft und so dazwischen eine Vertiefung bildet.

US 2019/170000 A1 offenbart eine Schaufelspitze einer Turbinenschaufel, die zumindest aufweist: eine auf einer Oberfläche entlang einer Außenkontur eines Schaufelblatts umlaufende Wand, wodurch eine Vertiefung in zwischen der Wand gebildet wird, wobei in der Wand ein Kanal vorhanden ist, wobei über zumindest einen Zuluftkanal der Turbinenschaufel der Kanal innerhalb der Wand mit Kühlluft versorgt werden kann, wobei mehrere Kühlluftlöcher vorhanden sind, die in der Wand angeordnet sind und mit dem Kanal strömungstechnisch verbunden sind und die Kühlluft aus dem radialen Ende der Wand ausströmen lassen.

Die Dokumente EP 3 428 397 A1, US 2019/153873 A1, WO 2019/177600 A1 und US 9 816 389 B2 zeigen ebenfalls Kühlungen von Turbinenchaufelspitzen.

Es ist Aufgabe der Erfindung, die Kühlung einer solchen Turbinenschaufelspitze zu verbessern.

Die Aufgabe wird gelöst durch eine Schaufelspitze gemäß Anspruch 1, eine Turbinenschaufel nach Anspruch 5 und ein Verfahren gemäß Anspruch 7.

In den Unteransprüchen sind weitere vorteilhafte Maßnahmen aufgelistet, die beliebig miteinander kombiniert werden können, um weitere Vorteile zu erzielen.

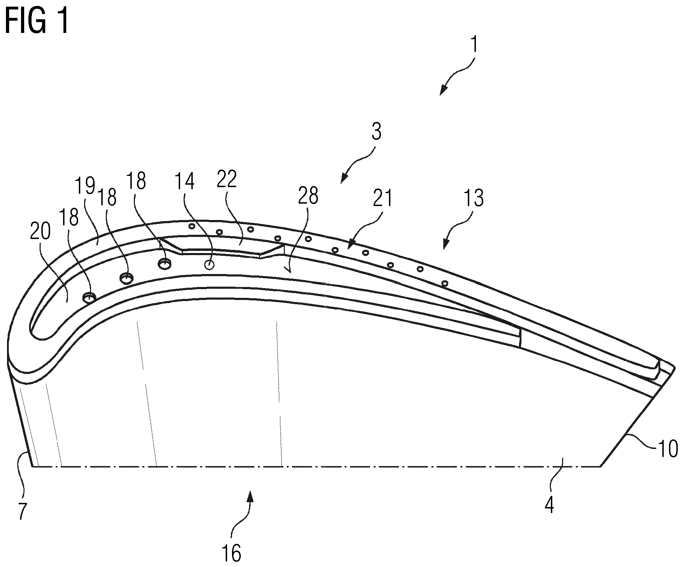

Es zeigen die Figuren 1 bis 6 schematisch die Erfindung.

Die Beschreibung und die Figuren stellen nur Ausführungsbeispiele der Erfindung dar, die auch beliebig miteinander kombiniert werden können, um weitere Vorteile zu erzielen.

Figur 1 zeigt eine Aufsicht auf eine Turbinenschaufelspitze 3 einer Turbinenschaufel **1.**

Zu erkennen sind eine Anströmkante 7 und eine Abströmkante 10 eines Schaufelblatts 4 der Turbinenschaufel 1.

Die Schaufelspitze 3 weist eine Wand 19 auf, die entlang der Außenkontur des Schaufelblatts 4 verläuft.

Die Wand 19 verläuft auf einer vorzugsweise flachen oder ebenen Oberfläche 28 der Turbinenschaufel 1.

In Radialrichtung 14 (Einbaurichtung der Turbinenschaufel 1 in der Turbine) gesehen weist die Wand 19 vorzugsweise an jeder Stelle vorzugsweise die gleiche Dicke auf.

Vorzugsweise hat die Wand 19 überall auch die gleiche Höhe von der Oberfläche 28 aus betrachtet.

Solche Verläufe und Geometrien der Wand 19 sind aus dem Stand der Technik bekannt.

Innerhalb einer Vertiefung 20, die durch die Wand 19 gebildet wird, ist vorzugweise zumindest ein, sind insbesondere mindestens zwei Kühlluftlöcher 18 im Grundkörper der Turbinenschaufel 1 vorhanden, aus denen aus der Oberfläche 28 Kühlluft ausströmt. Vorzugsweise sind es zwei oder drei Kühlluftlöcher 18. Die Kühlluftlöcher 18 sind vorzugsweise nahe der Anströmkante 7 und in Längsrichtung (= von Anströmkante 7 in Richtung Abströmkante 10) oder Umströmungsrichtung der Turbinenschaufel 1 im Einsatz gesehen vorzugsweise vor einem Einströmgehäuse 22 angeordnet.

Bei mehreren Kühlluftlöchern 18 sind diese vorzugsweise in Längsrichtung der Turbinenschaufel 1 hintereinander angeordnet.

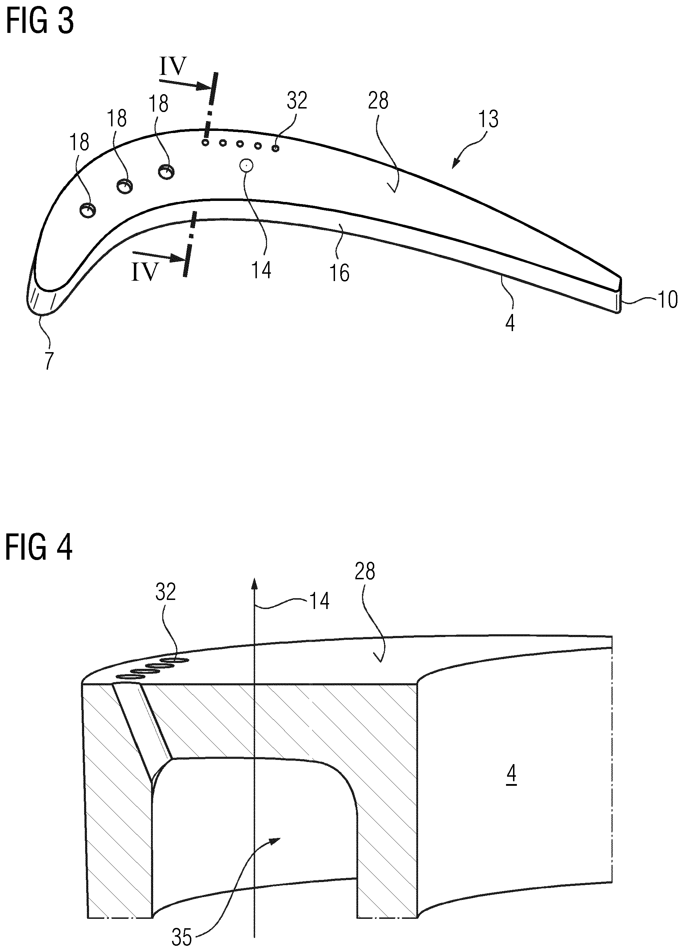

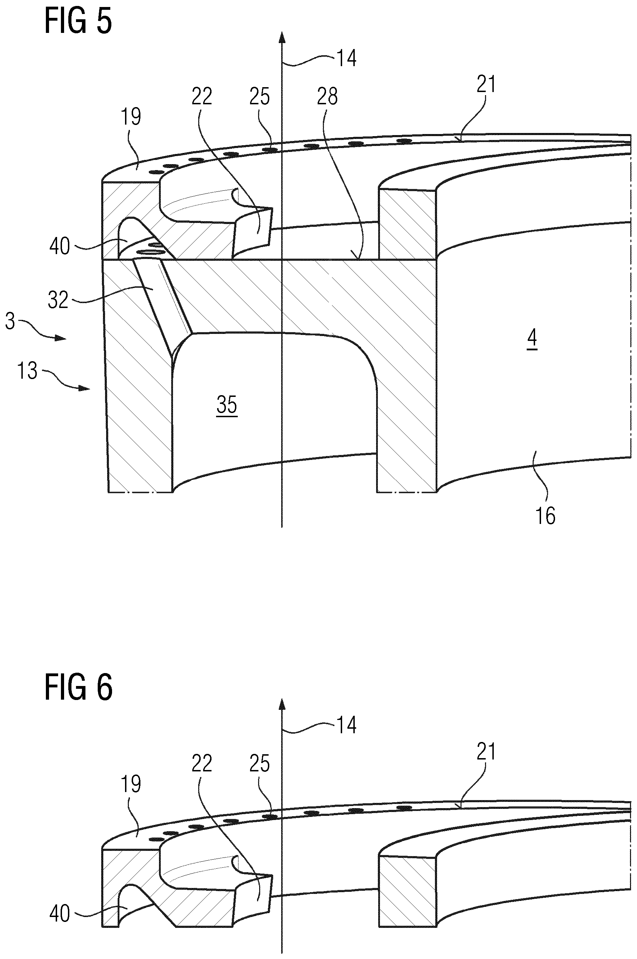

Innerhalb der Vertiefung 20 ist ein Einströmgehäuse 22 vorhanden, das Zuluftkanäle 32 (Fig. 4, 5) aus dem Inneren 35 der Turbinenschaufel 1 abdeckt, so dass Kühlluft in einen Kanal 40 der Wand 19 eingeleitet werden kann (Figur 5).

Es gibt insbesondere mindestens drei Zuluftkanäle 32. Vorzugsweise gibt es auch nur einen Kanal 40 in der Wand 19. Das Einströmgehäuse 22 ist auf der Oberfläche 28 innerhalb der Vertiefung 20 angeordnet und grenzt direkt an die Wand 19 an.

Dieses Einströmgehäuse 22 ist vorzugsweise auf der Saugseite 13 ausgebildet, die der Druckseite 16 gegenüberliegt. Das Einströmungsgehäuse 22 ist nicht so hoch wie die Wand 19. Das Einströmungsgehäuse 22 ist gerade so lang ausgebildet, um die Zuluftkanäle 32 zu überdecken (Fig. 5).

Das Einströmgehäuse 22 liegt in Längsrichtung gesehen vorzugsweise hinter dem letzten Kühlluftloch 18.

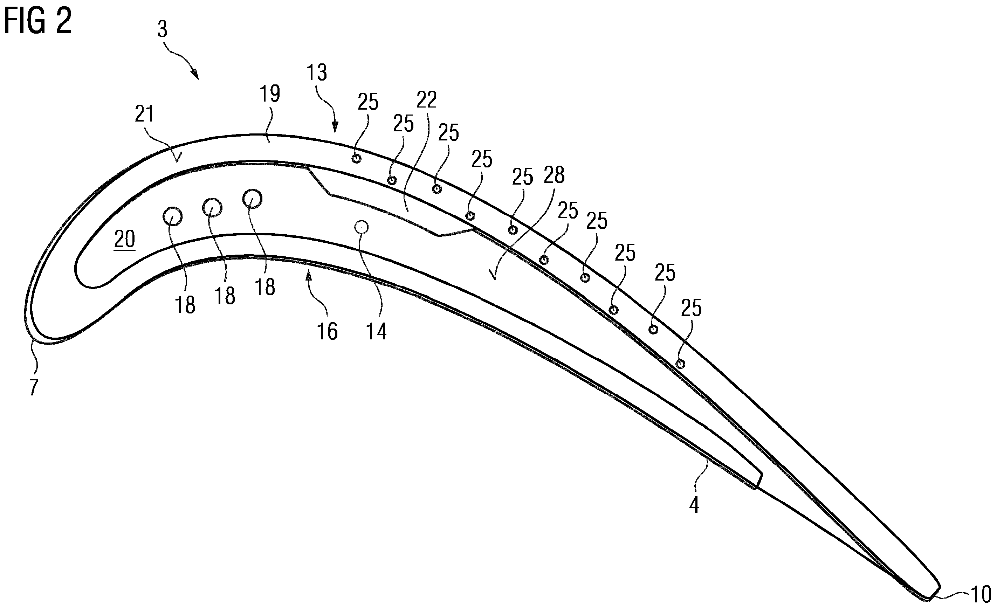

Figur 2 zeigt eine Aufsicht auf die Turbinenschaufelspitze 3. Die Wand 19 weist auf der Saugseite 13 auf ihrer äußersten Oberfläche 21 Ausgänge mehrerer Kühllöcher 25 auf, hier insbesondere zehn, aus denen Kühlluft aus dem Kanal 40 (Fig. 5, 6) der Wand 19 durch die Wand 19 nach außen strömt.

Die Kühllöcher 25 sind in Längsrichtung der Turbinenschaufelspitze 3 hintereinander und vorzugsweise versetzt zueinander angeordnet.

Von diesen Kühllöchern 25 gibt es vorzugsweise mindestens drei, ganz vorzugsweise mindestens fünf.

Die Kühlluftversorgung der Kühllöcher 25 erfolgt über einen Kühlluftkanal 40 (Fig. 5, 6), insbesondere nur durch den einen Kühlluftkanal 40.

Auf der Druckseite 16 sind in der Wand 19 vorzugsweise keine Löcher ausgebildet.

Figur 3 zeigt eine beispielhafte Ausgangssituation bei der Herstellung einer solchen Turbinenschaufelspitze 3.

Die Turbinenschaufel 1 wird mit einer vorzugsweise flachen oder ebenen Oberfläche 28 hergestellt oder nach einem Einsatz bereitgestellt bzw. aufgearbeitet, die vorzugsweise dann schon die Kühlluftlöcher 18 aufweist, die innerhalb des Bereichs der Vertiefung 20 angeordnet sind, sowie weitere, insbesondere fünf, Zuluftkanäle 32, aus denen Kühlluft aus dem Inneren 35 (Fig. 4, 5) der Turbinenschaufel 1 in den Kanal 40 innerhalb der Wand 19 strömen kann.

Eine solche Turbinenschaufel 1 kann schon bei der Neuherstellung oder bei der Reparatur gemäß Figur 3 hergestellt werden. Die Kühlluftlöcher 18 werden neu eingebracht bzw. sind schon vorhanden oder werden teilweise verschlossen, weil die Kühlung der Schaufelspitze 3 verbessert wurde. Insbesondere das in Umströmungsrichtung gesehen letzte Kühlluftloch 18.

Ebenso kann die gesamte Turbinenschaufel 1 mit Schaufelspitze 3 in einem additiven Verfahren komplett zusammen hergestellt sein.

Ebenso kann die Schaufelspitze 3 auf die Oberfläche 28 aufgetragen werden mittels SLM, SLS, Auftragsschweißen oder jedem anderen additiven Fertigungsverfahren.

Ebenso ist es möglich, die Schaufelspitze 3 separat herzustellen (Fig. 6) und mit der Turbinenschaufel 1 gemäß Figur 3 zu verbinden.

Figur 4 zeigt einen Schnitt gemäß Figur 3 mit der Oberfläche 28 und den Zuluftkanälen 32, die über das Innere 35, insbesondere aus einem Umlenkkanal (dem Inneren 35) heraus, innerhalb der Turbinenschaufel 1 versorgt werden.

Die Zuluftkanäle 32 verlaufen vorzugsweise unter einem Winkel α von 90° > α > 0°, insbesondere 80° ≥ α ≥ 5° zur Radialrichtung 14.

Figur 5 zeigt einen Schnitt durch eine erfindungsgemäße Struktur einer Schaufelspitze 3.

Die Schaufelspitze 3 kann ein Teil des Inneren 35 beinhalten oder auch erst ab Oberfläche 28 ausgebildet sein (Fig. 6).

Zu erkennen ist die Saug- 13 und Druckseite 16 und ein Inneres 35 oder Umlenkkanal 35 einer inneren Kühlstruktur der Turbinenschaufel 1 im Schaufelblatt 4.

Die Wand 19 weist im Querschnitt im Inneren den Kanal 40 auf, in den Kühlluft aus den Zuluftkanälen 32 einströmt. Der Kanal 40 verteilt dann über die vorzugsweise vorhandenen zehn Kühlluftlöcher 25 die Kühlluft nach außen.

Vorzugsweise die gesamte Kühlluft für die Wand 19 strömt aus vorzugsweise aus allen Zuluftkanälen 32 in den vorzugsweise einzigen Kanal 40 und dann vorzugsweise durch alle Kühllöcher 25 durch die Wand 19 nach draußen.

Der Kanal 40 weist im Querschnitt eine dreieckähnliche Form auf, die an dem oberen Ende abgerundet ist. Dadurch weist der Kanal 40 auf der Höhe der Oberfläche 28 eine größere Breite auf als am radialen Ende in Radialrichtung 14 gesehen.

Der Kanal 40 ist auf der Höhe der Oberfläche 28 vorzugsweise breiter als der Durchmesser der Zuluftkanäle ausgebildet.

Der Kanal 40 wird also im Querschnitt begrenzt durch die Oberfläche 28 der Turbinenschaufel 1 und der Wand 19 und wird auch durch das Einströmgehäuse 22 mitgebildet.

Der gegenüberliegende Teil der Wand 19 auf der Druckseite 16 weist vorzugsweise keinen Kanal in der Wand und auch keine Kühlluftlöcher auf.

Es können verschiedene Materialien für Schaufelspitze 3 und Schaufelblatt 4 verwendet werden.

Ebenso sind vorzugsweise keine Löcher vorhanden, die auf der Schaufelblattseite 13, 16 in der Nähe der Schaufelspitze austreten.

Solche Strukturen können durch additive Fertigungsverfahren, wie insbesondere selektives Laserschmelzen hergestellt werden. Dies kann bei der Neuherstellung oder bei der Reparatur erfolgen.

## Patentansprüche

1. Schaufelspitze (3) einer Turbinenschaufel (1),
die zumindest aufweist:
eine auf einer Oberfläche (28) entlang einer Außenkontur eines Schaufelblatts (4) umlaufende Wand (19),
wodurch eine Vertiefung (20) zwischen der Wand (19) gebildet wird,
wobei in der Wand (19) ein Kanal (40) vorhanden ist,
insbesondere nur ein Kanal (40) vorhanden ist,
wobei über mehrere,
insbesondere mindestens drei,
Zuluftkanäle (32) der Turbinenschaufel (1) der Kanal (40) innerhalb der Wand (19) mit Kühlluft versorgt werden kann,
wobei mehrere Kühlluftlöcher (25) vorhanden sind,
die in der Wand (19) angeordnet sind und
mit dem Kanal (40) strömungstechnisch verbunden sind oder werden können und
die Kühlluft aus dem radialen Ende (21) der Wand (19) ausströmen lassen,
insbesondere alle Kühlluftlöcher (25) mit dem Kanal (40) verbunden sind
wobei an der Wand (19) und innerhalb der Vertiefung (20) ein Einströmgehäuse (22) vorhanden ist,
wobei das Einströmungsgehäuse (22) nicht so hoch ist, wie die Wand (19),
wobei das Einströmgehäuse (22) Zuluftkanäle (32) in der Oberfläche (28) abdeckt,
die in den Kanal (40) der Wand (19) münden,
wobei das Einströmgehäuse (22) einen Teil des Kanals (40) bildet.

2. Schaufelspitze nach Anspruch 1,
wobei innerhalb der Vertiefung (20),
insbesondere im Bereich der Nähe einer Anströmkante (7), Kühlluftlöcher (18),
insbesondere zwei Kühlluftlöcher (18),
vorhanden sind,
aus denen Kühlluft aus dem Inneren (35) der Turbinenschaufel (1) nach außen ausströmt.

3. Schaufelspitze nach Anspruch 1,
bei der der Kanal (40) auf der Saugseite (13) in der Wand (19) ausgebildet ist.

4. Schaufelspitze nach einem oder mehreren der Ansprüche 1, 2 oder 3,
bei der die Zuluftkanäle (32) unter einem Winkel α von 90° > α > 0°, insbesondere 80° ≥ α ≥ 5° zur Radialrichtung (14) verlaufen.

5. Turbinenschaufel (1),
die entweder
wiederaufgearbeitet ist
oder
die ein Neuteil darstellt
und eine Schaufelspitze (3) mit einer auf einer Oberfläche (28) entlang einer Außenkontur des Schaufelblatts (4) umlaufenden Wand (19) nach einem oder mehreren der Ansprüche 1 bis 4 aufweist.

6. Turbinenschaufel nach Anspruch 5,
die verschiedene Materialien für Schaufelspitze (3) und Schaufelblatt (4) aufweist.

7. Verfahren zur Herstellung einer Schaufelspitze (3) nach einem oder mehreren der Ansprüche 1, 2, 3 oder 4 sowie einer Turbinenschaufel (1) nach Anspruch 5 oder 6,
im Rahmen einer Reparatur oder
einer Neuteilherstellung,
bei dem ein additives Fertigungsverfahren,
insbesondere selektives Laserschmelzen,
verwendet wird.

8. Verfahren nach Anspruch 7,
bei dem ein vorhandenes Kühlluftloch (18) verschlossen wird.

## Claims

1. A blade tip (3) of a turbine blade (1), having at least:
a wall (19) circumferential along an outer contour of a blade aerofoil (4) on a surface (28),
thereby forming a recess (20) between the wall (19),
wherein a duct (40) is present in the wall (19), in particular only one duct (40) is present, wherein via multiple,
in particular at least three, supply air ducts (32) of the turbine blade (1), the duct (40) within the wall (19) can be supplied with cooling air,
wherein multiple cooling air holes (25) are present,
which are arranged in the wall (19) and
are or can be fluidically connected to the duct (40) and
allow the cooling air to flow out of the radial end (21) of the wall (19),
in particular all of the cooling air holes (25) are connected to the duct (40),
wherein an air-intake casing (22) is present on the wall (19) and within the recess (20),
wherein the air-intake casing (22) is not as high as the wall (19),
wherein the air-intake casing (22) covers supply air ducts (32) in the surface (28),
which open into the duct (40) of the wall (19),
wherein the air-intake casing (22) forms a part of the duct (40).

2. The blade tip according to claim 1,
wherein within the recess (20),
in particular in the region in proximity of a leading edge (7), cooling air holes (18),
in particular two cooling air holes (18),
are present,
from which cooling air flows out of the interior (35) of the turbine blade (1) to the outside.

3. The blade tip according to claim 1,
in which the duct (40) is formed on the suction side (13) in the wall (19).

4. The blade tip according to any one or more of claims 1, 2 or 3,
in which the supply air ducts (32) are at an angle α of 90° > α > 0°, in particular 80° ≥ α ≥ 5°, with respect to the radial direction (14).

5. A turbine blade (1),
either
having been refurbished
or constituting a new part
and having a blade tip (3) with a wall (19) circumferential along an outer contour of the blade aerofoil (4) on a surface (28) according to any one or more of claims 1 to 4.

6. The turbine blade according to claim 5,
having different materials for the blade tip (3) and the blade aerofoil (4).

7. A method of producing a blade tip (3) according to any one or more of claims 1, 2, 3 or 4 and a turbine blade (1) according to claim 5 or 6,
within the framework of a repair or
of new part production,
in which an additive manufacturing method,
in particular selective laser melting,
is used.

8. The method according to claim 7,
in which a cooling air hole (18) present is closed.

## Revendications

1. Sommet d'aube (3) d'une aube de turbine (1), comprenant au moins :
une paroi (19) périphérique s'étendant sur une surface (28) le long d'un contour extérieur d'un profil aérodynamique (4),
de sorte qu'un évidement (20) est formé entre la paroi (19),
dans lequel un canal (40) est présent dans la paroi (19), en particulier un seul canal (40) est présent,
le canal (40) à l'intérieur de la paroi (19) pouvant être alimenté en air de refroidissement par plusieurs canaux d'amenée d'air (32), en particulier au moins trois, de l'aube de turbine (1),
dans lequel plusieurs trous d'air de refroidissement (25) sont présents,
lesquels sont disposés dans la paroi (19) et
sont ou peuvent être reliés fluidiquement au canal (40) et
permettent à l'air de refroidissement de s'écouler hors de l'extrémité radiale (21) de la paroi (19),
en particulier tous les trous d'air de refroidissement (25) étant reliés au canal (40),
dans lequel un boîtier d'admission (22) est présent sur la paroi (19) et à l'intérieur de l'évidement (20),
dans lequel le boîtier d'admission (22) n'est pas aussi haut que la paroi (19),
dans lequel le boîtier d'admission (22) recouvre des canaux d'amenée d'air (32) dans la surface (28)
qui débouchent dans le canal (40) de la paroi (19),
dans lequel le boîtier d'admission (22) forme une partie du canal (40).

2. Sommet d'aube selon la revendication 1,
dans lequel, à l'intérieur de l'évidement (20),
en particulier dans la zone à proximité d'un bord d'attaque (7), des trous d'air de refroidissement (18),
en particulier deux trous d'air de refroidissement (18),
sont présents,
à partir desquels de l'air de refroidissement s'écoule vers l'extérieur depuis l'intérieur (35) de l'aube de turbine (1).

3. Sommet d'aube selon la revendication 1,
dans lequel le canal (40) est ménagé dans la paroi (19) sur l'extrados (13).

4. Sommet d'aube selon l'une ou plusieurs des revendications 1, 2 ou 3,
dans lequel les canaux d'amenée d'air (32) s'étendent selon un angle α, 90° > α > 0°, en particulier 80° ≥ α ≥ 5° par rapport à la direction radiale (14).

5. Aube de turbine (1),
laquelle est soit
reconditionnée,
soit représente une pièce neuve,
et comprend un sommet d'aube (3) doté d'une paroi (19) périphérique sur une surface (28) le long d'un contour extérieur du profil aérodynamique (4) selon l'une ou plusieurs des revendications 1 à 4.

6. Aube de turbine selon la revendication 5,
présentant différents matériaux pour le sommet d'aube (3) et le profil aérodynamique (4).

7. Procédé de fabrication d'un sommet d'aube (3) selon l'une ou plusieurs des revendications 1, 2, 3 ou 4 ainsi que d'une aube de turbine (1) selon la revendication 5 ou 6,
dans le cadre d'une réparation ou
d'une fabrication de pièce neuve,
dans lequel un procédé de fabrication additive,
en particulier la fusion sélective par laser,
est utilisé.

8. Procédé selon la revendication 7,
dans lequel un trou d'air de refroidissement (18) existant est obturé.
